# EUROPÄISCHE PATENTSCHRIFT

(11) **EP 0 465 622 B1**
(45) Veröffentlichungstag und Bekanntmachung des Hinweises auf die Patenterteilung: **30.03.1994**
(21) Anmeldenummer: 91902689.8
(22) Anmeldetag: 15.01.1991
(51) Int. Cl.: B23K 26/02

(54) **SCHWEISSÜBERWACHUNGSEINRICHTUNG**
WELDING MONITORING DEVICE
DISPOSITIF DE SURVEILLANCE DE SOUDAGE

(30) Priorität: 30.01.1990 DE 4002627
(43) Veröffentlichungstag der Anmeldung: 15.01.1992
(73) Patentinhaber: DEUTSCHE FORSCHUNGSANSTALT FÜR LUFT- UND RAUMFAHRT e.V., 53111 Bonn (DE)
(72) Erfinder: BISSINGER, Norbert, D-7320 Göppingen-Faurndau (DE)
(74) Vertreter: Hoeger, Stellrecht & Partner
(86) Internationale Anmeldenummer: EP9100046
(87) Internationale Veröffentlichungsnummer: WO9111289

(56) Entgegenhaltungen:
- DVS, Volume 113, 1988, Düsseldorf (DE) pages 58-59 ; R. BECK ET AL.: "UV-Plasma-Sensor zur Überwachung von Laserstrahlschweisungen".

## Beschreibung

Die Erfindung betrifft eine Schweißüberwachungseinrichtung mit einer optischen Detektiereinrichtung, welche eine Lichtemission eines Schweißplasmas erfaßt und ein dem UV-Emissionsanteil entsprechendes Signal abgibt und mit einer dieses Signal verarbeitenden Analysiereinrichtung, welche mindestens ein Analysierglied aufweist, das diejenigen Unterbrechungen der UV-Emission feststellt, die eine vorbestimmbare Zeitdauer überschreiten (Siche z.B. DVS-Bericht vol. 113, 1988, DÜSSELDORF (DE); R. BECK et al.: "UV-Plasma-Sensor zur überwachung von Laserstrahlschweißungen").

Derartige Schweißüberwachungseinrichtungen sind aus dem Stand der Technik bekannt. Diese arbeiten mit einem Analysierglied, dessen vorbestimmbare Zeitdauer entsprechend den Parametern der vorzunehmenden Schweißung einstellbar ist und welches dann eine Unterbrechung der UV-Emission, die über diese vorbestimmbare Zeitdauer hinausgeht, sofort meldet, so daß beispielsweise aufgrund dieser Meldung der Schweißvorgang unterbrochen werden kann.

Der Nachteil dieser Einrichtung ist darin zu sehen, daß für jeden Schweißvorgang in Einzelversuchen und Versuchsreihen festgestellt werden muß, wie sich die Zusammenhänge zwischen Unterbrechungen der UV-Emission und der Schweißqualität darstellen, um festzustellen, welche vorbestimmbare Zeitdauer eingestellt werden muß, ab der die Schweißung lückenhaft ist und somit eine Unterbrechung des Schweißvorgangs gerechtfertigt ist.

Der Erfindung liegt daher die Aufgabe zugrunde, eine Schweißüberwachungseinrichtung der gattungsgemäßen Art derart zu verbessern, daß generell ohne Vorabversuche eine Dokumentation eines Schweißvorgangs hinsichtlich der dabei auftretenden Unterbrechungen der UV-Emission möglich ist, die nach Beendigung des Schweißvorgangs eine Auswertung erlaubt.

Diese Aufgabe wird bei einer Schweißüberwachungseinrichtung der eingangs beschriebenen Art erfindungsgemäß dadurch gelöst, daß die Analysiereinrichtung mehrere Analysierglieder aufweist, daß die vorbestimmbare Zeitdauer der einzelnen Analysierglieder voneinander unterschiedlich ist, daß jedes Analysierglied einem Speicherglied jede die jeweilige Zeitdauer überschreitende Unterbrechung meldet und daß jedes Speicherglied die gemeldeten Unterbrechungen für ein nachträgliches Auslesen festhält.

Der Vorteil der erfindungsgemäßen Schweißüberwachungseinrichtung ist somit darin zu sehen, daß jede Art von Schweißvorgang durchgeführt werden kann und daß nach Beendigung des Schweißvorgangs die Möglichkeit besteht, festzustellen, welche Arten von Unterbrechungen der UV-Emission vorliegen, um nunmehr unter rückwirkender Betrachtung des aktuellen Schweißergebnisses auszuwerten , ob die Schweißung fehlerhaft ist oder nicht.

Somit besteht beispielsweise die Möglichkeit, eine Schweißung mit der erfindungsgemäßen Schweißüberwachungseinrichtung derart zu überwachen, daß man zunächst eine Probeschweißnaht anfertigt, die Zahl der einzelnen Unterbrechungen mit den einzelnen vorbestimmten Zeitdauern ermittelt und durch einen Vergleich mit der aktuell angefertigten Schweißnaht in der Lage ist, einen Qualitätsstandard festzulegen, so daß bei Durchführung zukünftiger Schweißungen sofort im nachhinein an Hand der ebenfalls festgestellten Unterbrechungen die Qualität derselben beurteilt werden kann.

Besonders vorteilhaft ist es dabei, wenn die Analysiereinrichtung das Signal der Detektiereinrichtung durch ein Digitalisierglied mit einem Schwellwertglied digitalisiert und beim Überschreiten eines Schwellwerts ein normiertes Signal 1 und beim Unterschreiten desselben ein Signal 0 an die einzelnen Zeitglieder abgibt. Dies ermöglicht einen einfachen Anfbau der Zeitglieder als digitale Bausteine.

Noch zweckmäßiger ist es, wenn das Digitalisierglied als normiertes Signal 1 eine äquidistante Folge von Einzelimpulsen gleicher Pulsbreite abgibt, die in einfacher Weise von den Zeitgliedern verarbeitet werden können.

Zweckmäßigerweise wird dabei so vorgegangen, daß die Folgezeit der Einzelpulse und die Pulsbreite kleiner sind als die kleinste vorbestimmbare Zeitdauer.

Ferner hat es sich als zweckmäßig erwiesen, wenn die Analysiereinrichtung die Zeitdauer des Ausbleibens von Einzelpulsen ermittelt.

Ein vorteilhaftes Ausführungsbeispiel der erfindungsgemäßen Schweißüberwachungseinrichtung sieht dabei vor, daß jedes Zeitglied ein triggerbares Zeitablaufglied umfaßt, welches nach Ablauf der jeweils vorbestimmten Zeitdauer ein Signal abgibt.

Besonders günstig ausführbar ist dabei eine Lösung, bei welcher das triggerbare Zeitablaufglied eine Kippstufe umfaßt, wobei es sich vorzugsweise um eine monostabile nachtriggerbare Kippstufe handelt, welche insbesondere aus Gründen der Einfachheit flankentriggerbar ist.

Alternativ zu der Lösung der monostabilen Kippstufe ist vorteilhafterweise eine Lösung vorgesehen, bei welcher das Zeitablaufglied eine auf ein entsprechend der vorbestimmten Zeitdauer festgestellte Zählrate voreingestellter Zähler ist, der bei jedem Triggerimpuls von neuem zu zählen beginnt.

Zweckmäßigerweise sind dann bei dieser Lösung die Binär-Zähler aller Zeitablaufglieder durch einen gemeinsamen Taktgenerator, insbesondere einen einstellbaren Taktgenerator, angesteuert. Durch einen dem Taktgenerator nachgeschalteten Teiler kann weiterhin die Ablaufzeit aller Zeitablaufglieder in weiten Grenzen gemeinsam verstellt werden.

Hinsichtlich der vorbestimmbaren Zeitintervalle sieht eine für eine ausreichende Zeitauflösung zweckmäßige Ausführungsform vor, daß die vorbestimmbaren Zeitdauern der Zeitglieder sich jeweils um einen vorbestimmbaren Faktor unterscheiden, wobei vorzugsweise dieser Faktor ein Faktor zwei ist.

Hinsichtlich der Art der Detektierung der UV-Emmission wurden bislang keine näheren Ausführungen gemacht. So sieht ein Ausführungsbeispiel der erfindungsgemäßen Detektiereinrichtung vor, daß diese einen Lichtsensor mit einem vorgeschalteten Durchlaßfilter für UV-Licht aufweist.

Da derartige UV-Filter sehr teuer sind und teilweise die langwellige Lichtemission nicht vollständig unterdrücken, sieht eine vereinfachte und kostengünstige Ausführungsform vor, daß die Detektiereinrichtung einen ersten UV-empfindlichen und im langwelligeren Spektralbereich empfindlichen Lichtsensor und einen zweiten UV-unempfindlichen, jedoch in gleichen langwelligeren Spektralbereich empfindlichen Lichtsensor gleicher Art aufweist und daß das der UV-Emission entsprechende Intensitätssignal durch Subtraktion der Signale des zweiten vom ersten Sensor entsteht.

Eine weitere verbesserte Ausführungsform der erfindungsgemäßen Schweißüberwachungseinrichtung sieht vor, daß diese mit einem Wegmeßsystem gekoppelt ist, welches den Ort erfaßt, dessen Lichtemission die Detektiereinrichtung nachweist.

In diesem Fall besteht die Möglichkeit, in der Schweißüberwachungsvorrichtung auch noch gleichzeitig den Ort zu berücksichtigen, von welchem die Lichtemmission in der Detektiereinrichtung nachgewiesen wird.

Vorzugsweise ist dieses Ausführungsbeispiel so ausgebildet, daß jedes Speicherglied die Meldung einer Unterbrechung zusammen mit dem Ort des Nachweises der Lichtemission abspeichert, so daß zusätzlich zu der Information, daß eine Unterbrechung erfolgt ist, deren Zeitdauer die vorbestimmbare Zeitdauer überschreitet, auch noch gleichzeitig in dem Speicherglied mit dieser Information der jeweilige Ort erfaßt werden kann, und nach Durchführung des Schweißvorgangs die Möglichkeit besteht, festzustellen, an welchem Ort eine Unterbrechung mit welcher Zeitdauer erfolgt ist und somit rückblickend all diejenigen Orte festgestellt werden können, an welchen überhaupt eine Unregelmäßigkeit im Schweißvorgang vorgelegen hat. Durch entsprechende Analyse der jeweiligen Orte kann dann wiederum ein Rückschluß darauf gezogen werden, welche Dauer der Unterbrechung eine nachhaltige negative Beeinträchtigung des Schweißvorgangs zur Folge hat.

Besonders einfach läßt sich dies dadurch realisieren, daß die Schweißüberwachungseinrichtung eine Vorschubgeschwindigkeit erfaßt, mit welcher sich der Ort des Nachweises der Lichtemission bewegt. Dies kann beispielsweise durch ein inkrementales Meßverfahren erfolgen, bei dem äquidistante Wegimpulse aufaddiert werden.

Ferner ist bei einer weiteren verbesserten Ausführungsform der erfindungsgemäßen Vorrichtung noch zusätzlich vorgesehen, daß die vorbestimmten Zeitdauern, entsprechend der Vorschubgeschwindigkeit festlegbar sind, so daß beispielsweise automatisch die vorbestimmbaren Zeitdauern, auf deren Basis die einzelnen Zeitglieder arbeiten, mit variierender Vorschubgeschwindigkeit variiert werden.

Die erfindungsgemäße Schweißüberwachungseinrichtung läßt sich ferner noch dadurch ausbauen, daß eine Schweißsteuerungsvorrichtung vorgesehen ist, mit welcher entsprechend der über einen bestimmten Zeitraum ermittelten Zahl von Unterbrechungen Schweißparameter steuerbar sind, so daß vorzugsweise nach einem bestimmten Zeitraum die Zahl und Art der Unterbrechungen ermittelt wird und daraufhin für die zukünftige Zeit eine Festlegung der Schweißparameter, wie beispielsweise beim Laserschweißen die Laserintensität und die Vorschubgeschwindigkeit, erfolgt.

Darüberhinaus betrifft die Erfindung ein Verfahren zum Überwachen eines Schweißvorgangs, bei welchem die Unterbrechungen der UV-Emission eines Schweißplasmas erfaßt und hinsichtlich des Überschreitens mehrerer vorbestimmbarer Zeitdauern analysiert und das Ergebnis dieser Analyse für ein nachträgliches Auslesen abgespeichert wird.

Weitere Varianten des erfindungsgemäßen Verfahrens ergeben sich aus den vorstehenden Erläuterungen der Ausführungsbeispiele der erfindungsgemäßen Schweißüberwachungseinrichtung.

Weitere vorteilhafte Varianten der erfindungsgemäßen Schweißüberwachungseihrichtung und des entsprechenden Verfahrens ergeben sich aus der nachfolgenden Beschreibung sowie der zeichnerischen Darstellung einiger Ausführungsbeispiele. In der Zeichnung zeigen:
- Fig. 1: eine schemtatische Darstellung einer Schweißeinrichtung;
- Fig. 2: ein Blockdiagramm einer erfindungsgemäßen Schweißüberwachungseinrichtung;
- Fig.3: eine zusammenfassende Darstellung der einzelnen im Blockdiagramm gemäß Fig. 2 auftretenden Signale und der gespeicherten Unterbrechungen;
- Fig. 4: eine Variante eines Speichergliedes mit Auslesemöglichkeit und
- Fig. 5: eine Variante einer Detektiereinrichtung.

Ein Ausführungsbeispiel einer Schweißeinrichtung zum Zusammenschweißen zweier Metallplatten 10 und 12 mittels eines Laserstrahls 14 längs einer Verbindungslinie 16 umfaßt einen stationär angeordneten Laser 18, von welchem ausgehend ein Laserstrahl 20 zu einem Vorschubwagen 22 verläuft, der den Laserstrahl 20 umlenkt und als Laserstrahl 14 auf die Verbindungslinie 16 fokussiert.

An dem Vorschubwagen 22 ist außerdem ein Sensor 24 angeordnet, welcher die durch die Ausbildung eines Plasmas an einem vom Laserstrahl 14 getroffenen Schweißpunkt 26 entstehende Lichtemission, insbesondere das UV-Licht der sich am Schweißpunkt 26 bildenden Plasmablasen, detektiert.

Der Sensor 24 ist ferner Teil einer als Ganzes mit 28 bezeichneten Detektiereinrichtung, welche ihrerseits wiederum Teil einer als Ganzes mit 30 bezeichneten Schweißüberwachungseinrichtung ist.

Zum ausschließlichen Nachweis des UV-Lichts der Plasmablasen ist im einfachsten Fall der Sensor 24 auf seiner lichtempfindlichen Seite mit einem UV-Filter versehen, welches lediglich das UV-Licht durchläßt und langwelliges Licht absorbiert oder reflektiert.

Die Detektiereinrichtung 28 erzeugt ein elektrisches Signal I, welches für die UV-Lichtintensität charakteristisch ist, die vom Sensor 24 erfaßt ist.

In der erfindungsgemäßen Schweißüberwachungseinrichtung 30 wird das Signal I einer Analysiervorrichtung 33 mit einem Schwellwertglied 34 einer Digitalisiereinrichtung 35 übermittelt, welches das Analogsignal I in ein digitales Signal D umsetzt, je nach dem, ob das Signal I über oder unter einem im Schwellwertglied 34 einstellbaren Schwellwert S liegt.

Ferner umfaßt die Digitalisiereinrichtung 35 einen Oszillator 36, welcher in gleichem Zeitabstand aufeinanderfolgende und dieselbe Pulsbreite aufweisende Einzelpulse an ein Und-Glied 38 abgibt, welchem ebenfalls das Signal D zugeführt wird.

Dieses Und-Glied 38 läßt die Folge von Einzelpulsen des Oszillators 36 dann passieren, wenn beispielsweise das Signal D gleich 1 ist.

Ein vom Und-Glied abgegebenes Signal Z wird gleichzeitig parallel an eine Reihe von beispielsweise drei Zeitgliedern 40a bis c weitergegeben. Jedes dieser Zeitglieder 40a bis c ist so aufgebaut, daß es dann ein Signal an ein nachgeschaltetes Speicherglied 42a oder b oder c weitergibt, wenn eine vorbestimmte Zeitdauer Ta, Tb oder Tc zwischen zwei aufeinanderfolgenden Pulsen des Signals Z überschritten wird.

Vorzugsweise sind die Zeitdauern Ta, Tb und Tc so gewählt, daß die Zeitdauer Tb doppelt so lang ist wie die Zeitdauer Ta und die Zeitdauer Tc doppelt so lang wie die Zeitdauer Tb.

Im einfachsten Fall sind die Zeitglieder 40a bis c nachtriggerbare monostabilde Kippstufen, welche vorzugsweise über eine positive Flanke triggerbar sind.

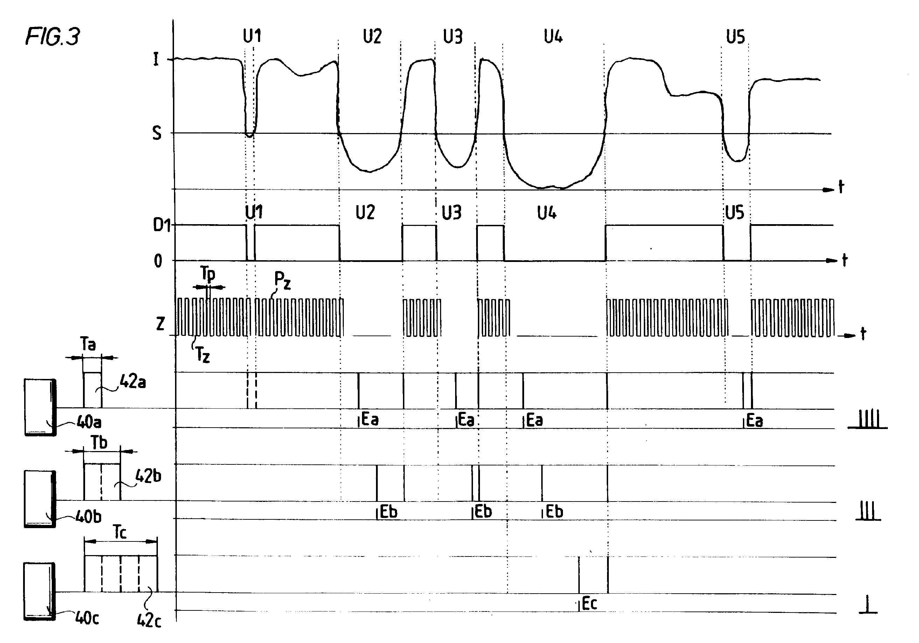

Die Funktion der erfindungsgemäßen Schweißüberwachungseinrichtung 30 ist in Fig. 3 an Hand eines hypothetischen Signals I dargestellt, welches von der Detektiereinrichtung 28 abgegeben wird.

Dieses analoge Signal I zeigt eine Serie von Unterbrechungen U, welche eine zu den jeweiligen Zeiten t nicht erfolgende Plasmablasenbildung und somit das Aussetzen der Plasmabildung beim Schweißvorgang repräsentieren.

Diese Unterbrechungen U1 bis U5 erfolgen im Verlauf des Verfahrens des Schweißpunktes 26 in Schweißrichtung 50.

Das Schwellwertglied 34 legt nun die Schwelle S an und digitalisiert das Signal I dergestalt, daß das vom Schwellwertglied 34 erzeugte Ausgangssignal D dann 1 ist, wenn das Signal I über dem Schwellwert für die Intensität liegt, während das Signal dann gleich 0 ist, wenn das Signal I den Schwellwert S unterschreitet.

Die Zeitdauer der Unterbrechungen U1 bis U5 zeigt sich somit im Signal D als Abfall des Signal 1 auf den Wert 0 während der jeweiligen Zeitdauer der Unterbrechungen U1 bis U5.

In dem Und-Glied 38 wird eine Und-Verknüpfung zwischen dem Signal D und in äquidistanten Zeitabständen Tz aufeinanderfolgender Einzelpulse Pz mit einer Pulsbreite Tp hergestellt. Das das Und-Glied verlassende Ausgangssignal Z zeigt somit während der Zeit t, während welcher das Signal D gleich 1 war, das Auftreten der Pulse Pz und während der Unterbrechungen U1 bis U5 ein Fehlen der Pulse Pz.

Wird nun ein derartiges Signal Z an die positiv flankengetriggerte nachtriggerbare monostabile Kippstufe 40a weitergegeben, welche das Signal während einer vorbestimmten Zeitdauer Ta auf eins hält, danach aber sofern kein Nachtriggern erfolgt ist, abfällt, so erfolgt immer dann ein Signalabfall und somit die Meldung einer Unterbrechung, wenn die Zeitdauern der Unterbrechungen U1 bis U5 größer sind als die Haltedauer Ta der nachtriggerbaren monostabilen Kippstufe. Erfolgt dagegen ein Nachtriggern, das heißt tritt während der Haltezeit der nachtriggerbaren monostabilen Kippstufe 40a eine weitere positive Flanke auf, so beginnt die Haltezeit von dieser weiteren positiven Flanke wiederum erneut zu laufen, so daß kein Abfall dieses Zeitgliedes bei all den Unterbrechungen erfolgt, die kürzer sind als die Haltezeit Ta dieses Zeitgliedes.

Beispielsweise ist in Fig.3 die Unterbrechung U1 kürzer gewählt als die Haltedauer Ta des Zeitgliedes 40a. Die Zeitdauer der übrigen Unterbrechungen U2 bis U5 ist größer als die Haltezeit Ta, so daß bei all den Unterbrechungen U2 bis U5 ein Signalabfall erfolgt.

Dieser Signalabfall wird an das Speicherglied 42a weitergemeldet, welches diesen Signalabfall als ein Ereignis Ea speichert.

Alle weiteren Ereignisse Ea werden ebenfalls von dem Speicherglied 42a gespeichert.

Das Zeitglied 40b funktioniert prinzipiell genauso wie das Zeitglied 40a mit dem Unterschied, daß die Haltezeit Tb des Zeitgliedes 40b doppelt so groß ist wie die Haltezeit Ta des Zeitgliedes 40a.

Aus diesem Grund werden all diejenigen der Unterbrechungen U1 bis U5 überbrückt, deren Zeitdauer kürzer ist als die Haltezeit Tb des Zeitgliedes 40b. Im in Fig.3 ausgewählten Ausführungsbeispiel trifft dies für die Unterbrechungen U1 und U5 zu, während die Zeitdauern der Unterbrechungen U2, U3 und U4 größer sind als die Haltezeit Tb, so daß bei den Unterbrechungen U2, U3 und U4 ein Abfallen des Signals erfolgt und somit die Ereignisse Eb an das Speicherglied 42b weitergegeben werden.

Das Zeitglied 40c hat eine Haltezeit Tc, die doppelt so groß ist als die Haltezeit Tb. Somit erfolgt beim in Fig.3 dargestellten Ausführungsbeispiel ein Abfall des Zeitgliedes 40c lediglich bei der Unterbrechung U4, so daß das Signal Ec an das Speicherglied 42c weitergeleitet wird.

Die Speicherglieder 42 zum Speichern und nachträglichen Auslesen der einzelnen, von den Zeitgliedern gemeldeten Unterbrechungen E können in unterschiedlichster Art und Weise ausgebildet sein.

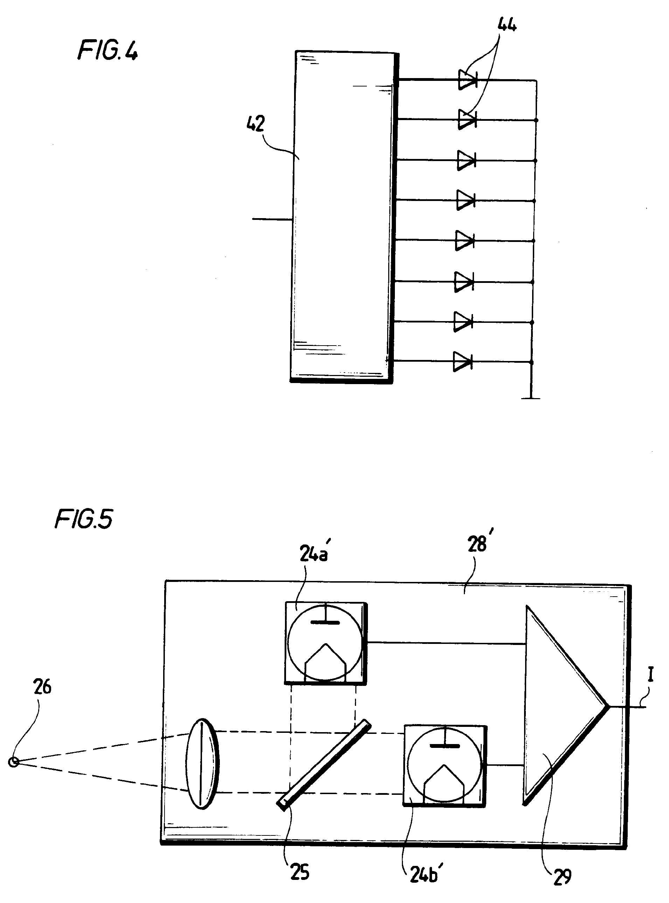

Im einfachsten Fall sind die Speicherglieder 42 als Zähler ausgebildet, die die Ereignisse E aufsummieren und die am Ende des Schweißvorgangs auslesbar sind. Beispielsweise ist, wie in Fig.4 dargestellt, jeder Zähler 42 mit acht Leuchtdioden 44 versehen, welche die Stellung des Zählers 42 in binär codierter Form anzeigen.

Bei einer verbesserten Ausführungsform der Schweißüberwachungseinrichtung wird zusätzlich über eine Wegmesseinrichtung 54, welche beispielsweise einen Maßstab 52 und einen Wegmeßsensor 56 umfaßt, der Vorschubweg des Schweißpunktes 26 pro Zeiteinheit ermittelt und es erfolgt eine Abspeicherung der Ereignisse E in Korrelation mit der jeweiligen Zeit t, zu der sie aufgetreten sind, so daß am Ende des Schweißvorgangs aus den jeweiligen Speichern 42a bis c, zum einen die Zahl der Ereignisse E ermittelt werden kann, gleichzeitig aber auch deren zeitliches Auftreten und somit über die von der Wegmeßeinrichtung 52 erfaßte Vorschubgeschwindigkeit angegeben werden kann, nach welchem Weg des Vorschubwagens 22 und somit bei welcher Lage des Schweißpunktes 26 in Schweißrichtung 50 die Plasmablasenbildung für eine Zeitdauer, die länger als die jeweils vorbestimmte Zeitdauer T war, ausgeblieben ist, so daß beispielsweise eine fehlerhafte Schweißung erkennbar ist.

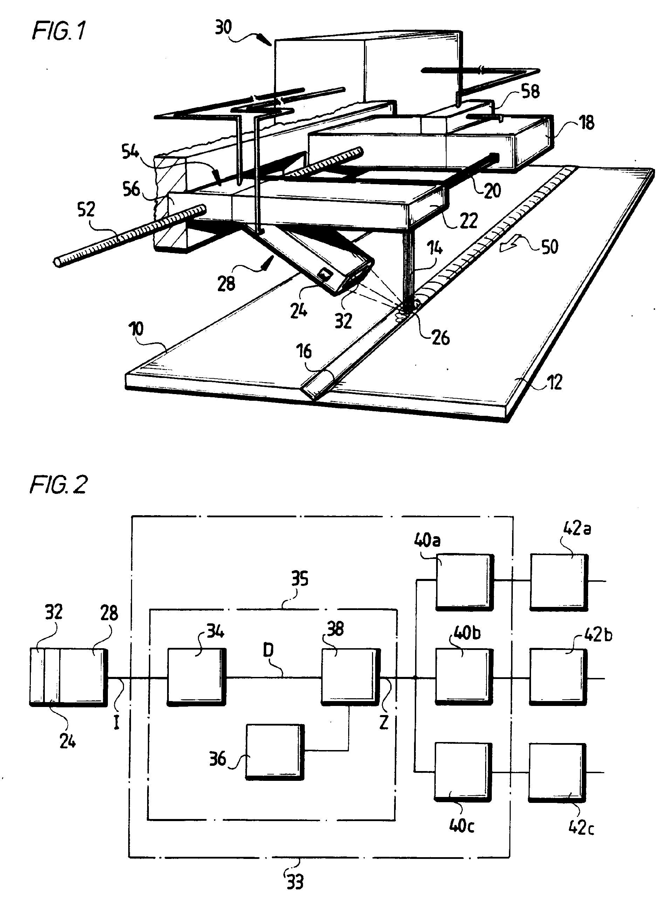

Ein weiteres verbessertes Ausführungsbeispiel sieht vor, daß, wie bereits in Fig. 1 dargestellt, eine Schweißsteuerungsvorrichtung 58 vorgesehen ist, welche die Schweißparameter, beispielsweise die Intensität des Lasers 18 steuert, und daß diese Schweißsteuerungsvorrichtung nach Zurücklegen eines vorbestimmten Wegs durch den Schweißpunkt 26 die Speicherglieder 42a bis c ausliest und entsprechend dem Auftreten von Unterbrechungen mit den Zeitdauern Ta, Tb und Tc die Schweißparameter, also beispielsweise die Intensität des Lasers 18, nachsteuert.

Bei der erfindungsgemäßen Schweißüberwachungseinrichtung kann die Zeitauflösung beliebig gut gewählt werden, wozu die Zahl der Zeitglieder 40 zu erhöhen ist und somit auch eine größere Zahl von vorbestimmten Zeitdauern zur Verfügung steht, bei deren Überschreiten eine Unterbrechung in dem jeweiligen Speicherglied 42 registriert wird.

Ein weiteres Ausführungsbeispiel einer erfindungsgemäßen Detektiereinrichtung 28', dargestellt in Fig.5, umfaßt im Gegensatz zum ersten Ausführungsbeispiel zwei Sensoren 24a' und 24b', auf welche das vom Schweißpunkt 26 kommende Licht beispielsweise mit einer halbdurchlässigen Platte 25 aufgeteilt wird. Dabei ist der Sensor 24a' ein UV-emfpindlicher Sensor, beispielsweise eine UV-empfindliche Halbleiterdiode, während der Sensor 24b' ein UV-unempfindlicher Sensor, beispielsweise eine UV-unempfindliche Halbleiterdiode, gleicher Art ist. Beide Sensoren 24a' und 24b' haben jedoch die gleiche spektrale Empfindlichkeit in dem Spektralbereich, der langwelliger als der UV-Bereich ist.

Das Signal der beiden Sensoren 24a' und 24b' wird nun auf die beiden Eingänge eines Differenzgliedes 29 gegeben, welches die von den beiden Sensoren 24a' und 24b' gemessenen Intensitäten voneinander subtrahiert und somit als Signal I ebenfalls ein Signal abgibt, welches hinsichtlich seiner Intensität der Intensität der UV-Emission der Plasmablasen entspricht.

## Patentansprüche

1. Schweißüberwachungseinrichtung (30) mit einer optischen Detektiereinrichtung (28), welche eine Lichtemission eines Schweißplasmas erfaßt und ein dem UV-Emissionsanteil entsprechendes Signal abgibt und mit einer dieses Signal verarbeitenden Analysiereinrichtung (33), welche mindestens ein Analysierglied aufweist, das diejenigen Unterbrechungen der UV-Emission feststellt, die eine vorbestimmbare Zeitdauer überschreiten,
**dadurch gekennzeichnet,**
daß die Analysiereinrichtung (33) mehrere Analysierglieder(40) aufweist, daß die vorbestimmbaren Zeitdauern (T) der einzelnen Analysierglieder (40) voneinander unterschiedlich sind, daß jedes Analysierglied (40) einem Speicherglied (42) jede die jeweilige vorbestimmbare Zeitdauer (T) überschreitende Unterbrechung (U) meldet und daß jedes Speicherglied (42) die gemeldeten Unterbrechungen (U) für ein nachträgliches Auslesen festhält.

2. Schweißüberwachungseinrichtung nach Anspruch 1, dadurch gekennzeichnet, daß die Analysiereinrichtung (33) das Signal (I) der Detektiereinrichtung (28) durch ein Digitalisierglied (35) mit einem Schwellwertglied (34) digitalisiert und beim Überschreiten eines Schwellwertes (S) ein normiertes Signal 1 und beim Unterschreiten desselben ein Signal 0 an die einzelnen Zeitglieder (40a, b, c) abgibt.

3. Schweißüberwachungseinrichtung nach Anspruch 2, dadurch gekennzeichnet, daß das Digitalisierglied (35) als normiertes Signal 1 eine äquidistante Folge von Einzelpulsen (Pz) gleicher Pulsbreite (Tp) abgibt.

4. Schweißüberwachungseinrichtung nach Anspruch 3, dadurch gekennzeichnet, daß die Folgezeit (Tz) und die Pulsbreite (Tp) kleiner sind als die kleinste vorbestimmbare Zeitdauer (Ta).

5. Schweißüberwachungseinrichtung nach einem der Ansprüche 3 oder 4, dadurch gekennzeichnet, daß die Analysiereinrichtung (33) die Zeitdauer des Ausbleibens von Einzelpulsen (Pz) ermittelt.

6. Schweißüberwachungseinrichtung nach einem der voranstehenden Ansprüche, dadurch gekennzeichnet, daß jedes Zeitglied (40) ein triggerbares Zeitablaufglied umfaßt, welches nach Ablauf der jeweils vorbestimmbaren Zeitdauer (T) ein Signal (E) abgibt.

7. Schweißüberwachungseinrichtung nach Anspruch 6, dadurch gekennzeichnet, daß das triggerbare Zeitablaufglied (40) eine monostabile nachtriggerbare Kippstufe umfaßt.

8. Schweißüberwachungseinrichtung nach Anspruch 6, dadurch gekennzeichnet, daß das triggerbare Zeitablaufglied ein auf eine entsprechend der vorbestimmten Zeitdauer (T) festgelegte Zählrate eingestellter Zähler ist, der bei jedem Triggerimpuls von neuem zu zählen beginnt.

9. Schweißüberwachungseinrichtung nach Anspruch 8, dadurch gekennzeichnet, daß die Zähler aller Zeitablaufglieder durch einen gemeinsamen Taktgenerator angesteuert sind.

10. Schweißüberwachungseinrichtung nach einem der voranstehenden Ansprüche, dadurch gekennzeichnet, daß die vorbestimmbaren Zeitdauern (T) der Zeitglieder (40) sich jeweils um einen vorbestimmbaren Faktor unterscheiden.

11. Schweißüberwachungseinrichtung nach einem der voranstehenden Ansprüche, dadurch gekennzeichnet, daß die Detektiereinrichtung (28) einen Lichtsensor (24) mit einem vorgeschalteten Durchlaßfilter (32) für UV-Licht aufweist.

12. Schweißüberwachungseinrichtung nach einem der Ansprüche 1 bis 10, dadurch gekennzeichnet, daß die Detektiereinrichtung einen ersten UV-empfindlichen (24a') und einen zweiten UV-unempfindlichen (24b') Lichtsensor gleicher Art aufweist und daß das der UV-Emission entsprechende Intensitätssignal (I) durch Subtraktion der Signale des zweiten vom ersten Sensor (24a', 24b') entsteht.

13. Schweißüberwachungseinrichtung nach einem der voranstehenden Ansprüche, dadurch gekennzeichnet, daß die Schweißüberwachungsvorrichtung (30) mit einem Wegmeßsystem (54) gekoppelt ist, welches eine Bewegung des Orts (26) erfaßt, dessen Lichtemission die Detektiereinrichtung (28) nachweist.

14. Schweißüberwachungseinrichtung nach Anspruch 13, dadurch gekennzeichnet, daß jedes Speicherglied (42) die Meldung (E) einer Unterbrechung (U) zusammen mit dem Ort (26) des Nachweises der Lichtemission abspeichert.

15. Schweißüberwachungseinrichtung nach einem der voranstehenden Ansprüche, dadurch gekennzeichnet, daß die Schweißüberwachungseinrichtung (30) eine Vorschubgeschwindigkeit erfaßt, mit welcher sich der Ort (26) des Nachweises der Lichtemission bewegt.

16. Schweißüberwachungseinrichtung nach Anspruch 15, dadurch gekennzeichnet, daß die vorbestimmten Zeitdauern (T) entsprechend der Vorschubgeschwindigkeit festlegbar sind.

17. Schweißüberwachungsvorrichtung nach einem der voranstehenden Ansprüche, dadurch gekennzeichnet, daß eine Schweißsteuerungsvorrichtung (58) vorgesehen ist, mit welcher entsprechend der über einen bestimmten Zeitraum ermittelten Unterbrechungen (U) Schweißparameter steuerbar sind.

## Claims

1. Welding monitoring device (30) comprising an optical detection device (28) for detecting a light emission of a welding plasma and emitting a signal corresponding to the ultraviolet emission portion and an analyzing device (33) for processing this signal, said analyzing device comprising at least one analyzing member for ascertaining those interruptions in the ultraviolet emission exceeding a predeterminable length of time, characterized in that the analyzing device (33) comprises a plurality of analyzing members (40), that the predeterminable lengths of time (T) of the individual analyzing members (40) differ from one another, that each analyzing member (40) reports each interruption (U) exceeding the respective predeterminable length of time (T) to a storage member (42) and that each storage member (42) retains the reported interruptions (U) for a subsequent read out.

2. Welding monitoring device as defined in claim 1, characterized in that the analyzing device (33) digitizes the signal (I) of the detection device (28) by a digitizing member (35) comprising a threshold member (34) and transmits to the individual timing circuits (40a, b, c) a normalized signal 1 when a threshold value (S) is exceeded and a signal O when this value is not reached.

3. Welding monitoring device as defined in claim 2, characterized in that the digitizing member (35) transmits as normalized signal 1 an equidistant sequence of individual pulses (Pz) having the same pulse width (Tp).

4. Welding monitoring device as defined in claim 3, characterized in that the follow-on time (Tz) and the pulse width (Tp) are shorter than the shortest predeterminable length of time (Ta).

5. Welding monitoring device as defined in either of claims 3 or 4, characterized in that the analyzing device (33) ascertains the length of absence of individual pulses (Pz).

6. Welding monitoring device as defined in any of the preceding claims, characterized in that each timing circuit (40) comprises a triggerable time-limit member generating a signal (E) once the respective predeterminable length of time (T) has elapsed.

7. Welding monitoring device as defined in claim 6, characterized in that the triggerable time-limit member (40) comprises a monostable, subsequently triggerable time-based circuit.

8. Welding monitoring device as defined in claim 6, characterized in that the triggerable time-limit member is a counter set to a counting rate determined in accordance with the predetermined length of time (T), said counter beginning a new count with each trigger pulse.

9. Welding monitoring device as defined in claim 8, characterized in that the counters of all the time-limit members are controlled by a common tact generator.

10. Welding monitoring device as defined in any of the preceding claims, characterized in that the predeterminable lengths of time (T) of the time-limit members (40) differ each time by a predeterminable factor.

11. Welding monitoring device as defined in any of the preceding claims, characterized in that the detection device (28) comprises a light sensor (24) with a filter (32) for passage of ultraviolet light connected to its inlet.

12. Welding monitoring device as defined in any of claims 1 to 10, characterized in that the detection device comprises a first light sensor (24a') sensitive to ultraviolet and a second light sensor (24b') of the same type insensitive to ultraviolet and that the intensity signal (I) corresponding to the ultraviolet emission results from subtracting the signals of the second from those of the first sensor (24a', 24b').

13. Welding monitoring device as defined in any of the preceding claims, characterized in that the welding monitoring device (30) is coupled to a distance measuring system (54) for determining movement of the location (26) where the light emission is detected by the detection device (28).

14. Welding monitoring device as defined in claim 13, characterized in that each storage member (42) stores the report (E) of an interruption (U) together with the location (26) of the detection of the light emission.

15. Welding monitoring device as defined in any of the preceding claims, characterized in that the welding monitoring device (30) detects an advancing speed, at which the location (26) of the detection of the light emission moves.

16. Welding monitoring device as defined in claim 15, characterized in that the predetermined lengths of time (T) are determinable in accordance with the advancing speed.

17. Welding monitoring device as defined in any of the preceding claims, characterized in that a welding control device (58) is provided for controlling welding parameters in accordance with the interruptions (U) ascertained over a specific period of time.

## Revendications

1. Dispositif (30) de surveillance de soudage, muni d'un dispositif (28) de détection optique qui détecte une émission lumineuse d'un plasma de soudage et délivre un signal correspondant à la part UV de l'émission, et d'un dispositif analyseur (33) qui traite ce signal et comporte au moins un organe analyseur constatant les interruptions de l'émission UV qui excèdent une durée prédéterminable,
caractérisé par le fait
que le dispositif analyseur (33) comprend plusieurs organes analyseurs (40) ; par le fait que les durées prédéterminables (T) des organes analyseurs individuels (40) diffèrent les unes des autres ; par le fait que chaque organe analyseur (40) signale, à un organe de mémorisation (42), chaque interruption (U) excédant la durée prédéterminable (T) considérée ; et par le fait que chaque organe de mémorisation (42) retient les interruptions signalées (U), en vue d'une sortie ultérieure.

2. Dispositif de surveillance de soudage selon la revendication 1, caractérisé par le fait que le dispositif analyseur (33) numérise le signal (I) du dispositif de détection (28), par l'intermédiaire d'un organe de numérisation (35) associé à un organe (34) à valeur de seuil, et délivre, aux organes individuels de temporisation (40a, b, c), un signal normalisé 1 lors du dépassement d'une valeur de seuil (S), et un signal 0 lors du dépassement négatif de ladite valeur.

3. Dispositif de surveillance de soudage selon la revendication 2, caractérisé par le fait que l'organe de numérisation (35) délivre, en tant que signal normalisé 1, un train d'impulsions individuelles équidistantes (Pz) de même largeur d'impulsion (Tp).

4. Dispositif de surveillance de soudage selon la revendication 3, caractérisé par le fait que l'intervalle de succession (Tz) et la largeur d'impulsion (Tp) sont inférieurs à la durée minimale (Ta) pouvant être prédéterminée.

5. Dispositif de surveillance de soudage selon l'une des revendications 3 ou 4, caractérisé par le fait que le dispositif analyseur (33) établit la durée de l'absence d'impulsions individuelles (Pz).

6. Dispositif de surveillance de soudage selon l'une des revendications précédentes, caractérisé par le fait que chaque organe de temporisation (40) comprend un organe déclenchable de décomptage, qui délivre un signal (E) à l'expiration de la durée prédéterminable (T) considérée.

7. Dispositif de surveillance de soudage selon la revendication 6, caractérisé par le fait que l'organe déclenchable de décomptage (40) comprend une bascule monostable post-déclenchable.

8. Dispositif de surveillance de soudage selon la revendication 6, caractérisé par le fait que l'organe déclenchable de décomptage est un compteur qui est réglé sur une fréquence de comptage fixée en concordance avec la durée prédéterminée (T), et qui recommence à compter lors de chaque impulsion de déclenchement.

9. Dispositif de surveillance de soudage selon la revendication 8, caractérisé par le fait que les compteurs de tous les organes de décomptage sont activés par l'intermédiaire d'un rythmeur commun.

10. Dispositif de surveillance de soudage selon l'une des revendications précédentes, caractérisé par le fait que les durées prédéterminables (T) des organes de temporisation (40) se différencient respectivement selon un facteur prédéterminable.

11. Dispositif de surveillance de soudage selon l'une des revendications précédentes, caractérisé par le fait que le dispositif de détection (28) présente un détecteur de lumière (24), en amont duquel est installé un filtre (32) de passage de la lumière UV.

12. Dispositif de surveillance de soudage selon l'une des revendications 1 à 10, caractérisé par le fait que le dispositif de détection comprend un premier détecteur de lumière (24a') sensible aux UV et un second détecteur de lumière (24b') insensible aux UV, ces détecteurs étant de même type ; et par le fait que le signal d'intensité (I) correspondant à l'émission UV est obtenu en retranchant, du premier détecteur (24a'), les signaux du second détecteur (24b').

13. Dispositif de surveillance de soudage selon l'une des revendications précédentes, caractérisé par le fait que ce dispositif (30) de surveillance de soudage est couplé à un système (54) mesureur de trajets, qui détecte un déplacement du site (26) dont l'émission lumineuse est décelée par le dispositif de détection (28).

14. Dispositif de surveillance de soudage selon la revendication 13, caractérisé par le fait que chaque organe de mémorisation (42) mémorise la signalisation (E) d'une interruption (U), conjointement au site (26) de l'identification de l'émission lumineuse.

15. Dispositif de surveillance de soudage selon l'une des revendications précédentes, caractérisé par le fait que ce dispositif (30) de surveillance de soudage détecte une vitesse d'avance à laquelle se déplace le site (26) de l'identification de l'émission lumineuse.

16. Dispositif de surveillance de soudage selon la revendication 15, caractérisé par le fait que les durées prédéterminées (T) peuvent être fixées en concordance avec la vitesse d'avance.

17. Dispositif de surveillance de soudage selon l'une des revendications précédentes, caractérisé par le fait qu'il est prévu une unité (58) de surveillance de soudage, à l'aide de laquelle des paramètres de soudage peuvent étre commandés en fonction des interruptions (U) établies durant une période déterminée.
